# EUROPÄISCHE PATENTSCHRIFT

(11) **EP 1 530 992 B1**
(45) Veröffentlichungstag und Bekanntmachung des Hinweises auf die Patenterteilung: **28.11.2007**
(21) Anmeldenummer: 04022628.4
(22) Anmeldetag: 23.09.2004
(51) Int. Cl.: B01D 29/15, B01D 29/52

(54) **Filterelement für das Zurückhalten von Grobstoffen in einer fliessenden Flüssigkeit**
Filtering element for retaining coarse contaminants of a flowing liquid
Elément filtrant pour retenir les contaminants grossiers d'un liquide en écoulement

(30) Priorität: 11.11.2003 DE 10352937
(43) Veröffentlichungstag der Anmeldung: 18.05.2005
(73) Patentinhaber: Blomeier, Maximilian, 50674 Köln (DE); Sauer, Markus, 44534 Lünen (DE); Wilhelmy, Karl-Heinz, 50997 Köln (DE); Lülsdorf, Detlef, 50931 Köln (DE)
(72) Erfinder: Blomeier, Maximilian, 50674 Köln (DE); Sauer, Markus, 44534 Lünen (DE); Wilhelmy, Karl-Heinz, 50997 Köln (DE); Lülsdorf, Detlef, 50931 Köln (DE)
(74) Vertreter: Kayser, Martin

(56) Entgegenhaltungen:
- EP-A- 0 747 106
- DE-B- 1 005 493
- US-A- 4 629 483
- US-A- 5 290 457
- US-A- 5 993 502
- US-B1- 6 342 158

## Beschreibung

Die vorliegende Erfindung betrifft ein längliches Filterelement für das Zurückhalten von Grobstoffen in einer fließenden Flüssigkeit.

Das Einsatzgebiet für Filterelemente ist sehr weit, wobei im Rahmen dieser Erfindung insbesondere Filterelemente für wasserbauliche Anlagen gemeint sind. Insbesondere sind die erfindungsgemäßen Filterelemente dazu geeignet, im Zusammenhang mit Wasserkraftanlagen eingesetzt zu werden. In einem Wasserkraftwerk wird die Wasserkraft zur Stromerzeugung genutzt. Strömendes Wasser setzt beispielsweise eine Turbine oder eine Wasserrad in Bewegung, wodurch dann ein Generator zur Stromerzeugung angetrieben wird. Die Nutzung von Wasserkraft ist insbesondere in Gegenden mit Vorflutern, Flüssen oder Bächen möglich, es besteht aber auch die Möglichkeit industrielle Gewässer zu nutzen. Als Filterelement bzw. Filteranlagen werden üblicherweise Rechen eingesetzt, die in die Strömung des zu reinigenden bzw. zu nutzenden Wasser eingesetzt werden, um Treibgut aus diesem herauszufiltern. Neben Treibgut, beispielsweise Laub, Hausmüll, Äste usw. ist aber auch das Herausfiltern von kleineren Partikeln, wie beispielsweise Sand oder Pflanzenteilen notwendig.

Bei natürlichen Gewässern besteht das Problem, dass Fische, angezogen vom Lockstrom, in die Wasserkraftanlage geraten können. Auch dies soll durch Filterelemente bzw. Filteranlagen verhindert werden. Es hat sich aber gezeigt, dass Fische die in die bisher üblichen Rechen gelangen, in diesen verletzt oder getötet werden. Es ist also nicht nur die Wasserkraftanlage, die für die Fische eine Gefahr darstellt, auch die bisher üblichen Rechenanlagen selbst können Fische töten oder verletzen.

Eine wesentliche Anforderung an Filteranlagen besteht darin, dass sie das gesamte strömende Wasser reinigen, sich also über den gesamten Querschnitt erstrecken. Filteranlagen sind also deshalb üblicherweise so breit, dass im wesentlichen der gesamte Flüssigkeitsstrom durch die Filteranlage strömt, sofern nicht bei einem erheblichen Flüssigkeits- bzw. Wasseranfall, beispielsweise bei einem starken Regenereignis, ein Teil der anfallenden Flüssigkeit über einen Notüberlauf um die Filteranlage herum geleitet wird. Durch die Filteranlage wird der Strömung ein Widerstand entgegen gesetzt, der zu zum Teil erheblichen Druckunterschieden vor und hinter der Filteranlage führt. Insofern ist es notwendig, einen Kompromiss zwischen ausreichender Filterung und Rückstauung der Flüssigkeit zu finden.

Die oben bereits genannten Rechenanlagen sind beispielsweise aus den Druckschriften DE 101 00 098 A1, DE 197 14 089 A1 und DE 195 15 924 A1 bekannt. Derartige Rechen arbeiten prinzipiell alle nach dem gleichen Prinzip, sie bestehen aus einem starren Profilrahmen mit in einem entsprechend Abstand parallel angeordneten und eingespannten Sieblamellen. Das sich an den Sieblamellen angesammelten Material wird mit Hilfe eines Rechens in bestimmten Zyklen abgeführt. Die beschriebenen Filteranlagen haben, wie oben bereits ausgeführt, den Nachteil, dass zum einem Fische und Lebewesen in solchen Anlagen verletzt und getötet werden können, zum anderen führen sie zu einer starken Rückstauung des strömenden Wassers. Hinzu kommt, dass die Konstruktion bzw. der Bau und auch die Wartung solcher Anlagen verhältnismäßig aufwendig sind. Dies wiederum führt zu relativ hohen Kosten.

Die Aufgabe der vorliegenden Erfindung besteht darin, **ein Filterelement und dessen Verwendung in einer** Filteranlage zu schaffen, mit dem die oben genannten Nachteile vermieden werden können. Insbesondere soll es möglich sein, Filterelemente in Vorflutern oder Flussläufen im Vorfeld von Wasserkraftanlagen einzusetzen, wobei dabei die Gefährdung von Lebewesen und Fischen möglichst gering sein soll. Weiterhin soll das Filterelement eine gute Durchlässigkeit aufweisen, damit Druckunterschiede vor und nach einer Filteranlage gering sind bzw. ein übermäßiger Rückstau vermieden wird. Das Filterelement soll einfach konstruiert und kostengünstig herstellbar sein.

Erfindungsgemäß wird die Aufgabe gelöst durch ein längliches Filterelement für das Zurückhalten von Grobstoffen in einer fließenden Flüssigkeit, mit
- einem Rohr, das verbunden ist mit
- einem hohlen Filterkörper, der gebildet ist aus
   - einem innen angeordneten, einen Hohlraum ausbildenden und mit dem Rohr verbundenem Tragegerüst,
   - einer Grundschicht aus relativ grobkörnigem Material, dass das Tagegerüst umgibt und mit diesem verbunden ist,
   - einer Außenschicht aus relativ feinkörnigem Material, dass die Grundschicht umgibt und mit dieser verbunden ist,
sodass die Flüssigkeit von außen in den Filterkörper und dann durch das Rohr abfließen kann.

**Weiterhin wird die Aufgabe durch die Verwendung eines erfindungsgemäßen Filterelementes nach einem der Ansprüche 1 bis 6 in einer Filterwand (38) zum Einsetzen in eine strömende Flüssigkeit gelöst, wobei die Filterwand (38)**
- eine Tragekonstruktion mit einer der Fließrichtung der Flüssigkeit im eingesetzten Zustand entgegen gesetzten Vorderseite und einer Rückseite, und
- Öffnungen in die je ein Rohr eines Filterelementes nach einem der Ansprüche 1 bis 6 **eingesetzt ist**.

Das erfindungsgemäße Filterelement stellt eine Abkehr von den bekannten Filterelementen dar. Erfindungsgemäß sind nämlich die Filterschichten genau andersherum als üblich angeordnet. Das Wasser bzw. die Flüssigkeit passiert zunächst die feinkörnige Außenschicht und passiert erst dann die grobkörnige Grundschicht, um schließlich durch den Tragekörper in das Innere des Rohres zu gelangen und aus diesem abgeleitet zu werden. Vorteilhafterweise weist die Außenschicht eine Körnung von unter 2 mm, insbesondere 0,3 mm bis 1,3 mm auf, während die Grundschicht aus Splitmaterial mit einer Körnung von 6 mm bis 8 mm gebildet ist.

Eine der Außenschicht ähnliche Körnung wird beispielsweise für die Beschichtung von Bodenplatten verwendet und es hat sich dabei gezeigt, dass eine solche Schicht durch Feinstpartikel und Abrieb von beispielsweise LKW-Reifen nicht zugesetzt wird. In Langzeitversuchen hat sich gezeigt, dass das erfindungsgemäße Filterelement auch bei einem Langzeiteinsatz über viele Jahre durchlässig bleibt.

Split ist für die Grundschicht deshalb besonders geeignet, weil durch die scharfen Kanten und unregelmäßigen Formen eine optimale Permeabilität erreicht wird und die Flüssigkeit schnell und effektiv in das Innere des Filterkörpers abgeleitet werden kann.

In einer ersten Ausführungsvariante weist ein Filterelement eine Länge von etwa 285 mm bis 760 mm auf, wobei die Länge des Filterkörpers etwa 165 mm bis 320 mm und die Länge der überstehenden Rohre entsprechend bis zu etwa 595 mm beträgt. Die angegebenen Längen sind auf eine sich in Längsrichtung des Rohres und des Filterkörpers erstreckende Längsachse bezogen. Die Schichtdicke der Außenschicht und die Schichtdicke der Grundschicht können je nach Anforderung variieren, es hat sich aber gezeigt, dass ein Verhältnis von 1 zu 3 bis 1 zu 4 der Außenschicht zur Grundschicht günstig ist. Beispielsweise kann die Schichtdicke der Außenschicht 5 mm und die Schichtdicke der Grundschicht 15 mm bis 20 mm betragen.

Das Rohr kann einen Innendurchmesser vom 62 mm und einen Außendurchmesser von 65 mm aufweisen und z.B. aus Kunststoff oder Metall gebildet sein. An das Rohr schließt sich das Tragegerüst an, das sich in den Filterkörper hinein erstreckt. Dieses kann vorzugsweise durch einzelne Metall- oder Kunststoffstäbe gebildet sein, die aus einem Netz mit Metall oder Kunststoff umwickelt sind.

Die angegebenen Größenordnungen sind je nach individueller Anforderung frei wählbar, die angegebenen Abmessungen sind lediglich beispielhaft zu verstehen.

Erfindungsgemäß erfolgt die Herstellung eines solchen Filterelementes in wenigen, einfach durchzuführenden Schritten. In einem ersten Schritt wird das Rohr endseitig mit dem Tragegerüst verbunden. Dies kann beispielsweise dadurch geschehen, dass das Ende des Rohres mit Metall- oder Kunststoffstäben verbunden wird, beispielsweise durch Schweißen oder Kleben. Die dann freien Enden der Stäbe können bedarfsweise miteinander verbunden werden. Anschließend werden die Stäbe mit einem Netz oder Gitter überzogen. Hier bietet sich beispielsweise ein Nylonnetz an, das nach Art eines Strumpfes über die Stäbe gezogen wird. Möglich ist aber auch ein Metallnetz, das geklebt, geschweißt oder gelötet wird.

Parallel dazu wird in einer Form, beispielsweise einer Becherform die Außenschicht ausgebildet. Es hat sich als besonders vorteilhaft erwiesen, wenn als Bindemittel für die Körner ein Epoxydharz verwendet wird. Dabei reichen 0,8 1 bis 1 l Epoxydharz für das Verkleben von 25 kg Feinschicht aus. Für die Verbindung des Grobkornes bzw. des Splitmaterials reicht eine Menge Epoxydharz von etwa 0,4 bis 0,6 l aus. Epoxydharz hat den Vorteil, dass dieser während des Einsatzes des Filterelementes keiner Giftstoffe absondert. Vorzugsweise wird Epoxydharz mit einer Lebensmittelzulassung verwendet. Sobald die Außenschicht angehärtet ist, wird in die Form, in der sich schon die Außenschicht befindet, Splitmaterial hineingegeben, bis der Boden vollständig bedeckt ist. Anschließend wird das Tragegerüst auf den bedeckten Boden gestellt und der Zwischenraum zwischen dem Tragegerüst und der Außenschicht mit grobkörnigem Material, vorzugsweise Split, das ebenfalls mit Epoxydharz versetzt ist, gefüllt. Das Netz oder Gitter verhindert dabei, dass Material in den Hohlraum eindringen kann, weiterhin ermöglicht es, dass die Grundschicht verdichtet werden kann. Nach dem Aushärten kann dann die Außenschicht von der Form getrennt werden und das Filterelement ist einsatzbereit. Vorzugsweise kann der Filterkörper eine leicht konische Form aufweisen, damit er leichter aus der Form heraus gelöst werden kann. Es hat sich weiterhin gezeigt, dass es vorteilhaft ist, wenn die dem Rohr zugewandte ringförmige Rückseite des Filterkörpers mit Hilfe von Epoxydharz und Feinkorn abgedichtet wird. Dies hat den Vorteil, dass von vorne einströmendes Wasser nicht auf der Rückseite wieder hinaus gelangen kann und weiterhin wird die Fertigung des Filterelementes dadurch erleichtert.

Anhand der erläuterten Ausführungsvariante lässt sich leicht erläutern, warum sich die nutzbare Filterfläche so deutlich vergrößert. Eine kreisförmige Öffnung mit einem Durchmesser von 65 mm weist eine Fläche von etwa 30 cm² auf. Wird in diese Öffnung ein erfindungsgemäßes Filterelement eingesteckt, kann die Außenfläche des Filterkörpers als Filterfläche genutzt werden. Dies bedeutet bei einem Außendurchmesser des Filterkörpers von durchschnittlich etwa 120 mm und einer Länge von 160 mm, dass die nutzbare Fläche etwa 715 cm² beträgt. Daraus ergibt sich ein Verhältnis von etwa 1 zu 24 zwischen der Öffnung und dem Filterelement.

In einer vorteilhaften Weiterbildung des erfindungsgemäßen Filterelementes ist innerhalb des Rohres ein sich entlang der Längsachse erstreckender Strömungskörper angeordnet. Dieser ist durch einen Materialstreifen gebildet, der um seine Längsachse helixartig tordiert ist. Dieser Strömungskörper erstreckt sich vorteilhafterweise durch das gesamte Tragegerüst und das gesamte Rohr hindurch und ist im Querschnitt in etwa mittig angeordnet. Der Strömungskörper bewirkt, dass das turbulent herein strömende Wasser von diesem aufgrund der Helixform in eine andere Strömungsrichtung umgeleitet und gleichgerichtet wird. Dies wiederum führt dazu, dass das in den Hohlraum eindringende Wasser schneller kontrolliert und abgeleitet werden kann.

Das Filterelement eignet sich insbesondere für einen Einsatz in einer Filterwand, die in ein fließendes Gewässer eingestellt werden kann und dieses filtert. Die Filterwand ist aus einer beispielsweise rahmenartigen Tragekonstruktion gebildet, die durch eine Abdeckung abgedeckt sein kann. In der Tragekonstruktion bzw. in der Abdeckung befinden sich Öffnungen, in die die Rohre der Filterelemente eingesteckt werden können. Somit können eine Vielzahl Filterelemente in eine solche Tragekonstruktion nebeneinander eingesteckt werden. Je nach Gegebenheiten reicht eine klemmende Befestigung in der Tragekonstruktion aus, es kann aber auch vorteilhaft sein, die Rohre beispielsweise mit einem Gewinde auszustatten, dass dann in die Öffnung eingeschraubt wird. Auch können diese mit Hilfe einer Schraube oder einem Splint an der Rückseite der Abdeckung befestigt werden. Um die nutzbare Filterfläche weiter zu erhöhen, ist vorgesehen, eine Schicht aus Filterelementen mit relativ kurzen Rohren und eine weitere Schicht aus Filterelementen mit relativ langen Rohren zu bilden, die in Wechsel angeordnet sind. Beispielsweise können die Filterelemente mit kurzen Rohren matrixmäßig, also nach Art eines Schachbrettmusters nebeneinander angeordnet sein. Daraus ergibt sich, dass in der Mitte von vier Filterelementen ein relativ großer Freiraum entsteht. Der Abstand der vier Filterelemente zueinander wird so bemessen, dass sich ein Rohr eines Filterelementes mit langem Rohr zwischen den vier Filterkörpern hindurch bis in eine Öffnung der Tragekonstruktion erstrecken kann.

Messungen haben ergeben, dass durch eine erfindungsgemäße Filterwand bis zu 250 1 pro Sekunde pro Quadratmeter geleitet und gefiltert werden können. Die Messungen wurden mit einer Filterwand mit 98 Filterelementen an einer etwa ein Meter breiten und 5 cm hohen Strömungsstufe durchgeführt. Die Durchflussrate ist unter anderem deshalb so hoch, weil sich hinter den Filterelementen nach einer gewissen Zeit ein Sog einstellt.

Die Filterwand kann durch jede geeignete Vorrichtung im fließenden Gewässer gehalten werden. Es bietet sich zum Beispiel an, die Filterwand an einer Art Brücke zu befestigen, die dann über den Wasserlauf gelegt und befestigt wird. In einer besonders vorteilhaften Ausführungsform ist ein Fußkörper vorgesehen, der auf den Grund des Bettes des fließendes Gewässer aufgesetzt wird und der eine Nut aufweist, in die eine Außenseite der Tragekonstruktion einsetzbar ist.

**Die Verwendung des erfindungsgemäßen Filterelementes in einer Filterwand** stellt für Lebewesen und Fische keinerlei Gefahr da. Sie ist gegenüber länglichen Festkörpern wie beispielsweise Algen oder ähnlichem absolut undurchlässig, so dass dahinter liegende Anlagenbauteile, wie beispielsweise eine Turbine oder ein Wasserrad effektiv geschützt sind.

Im folgendem wird die Erfindung anhand der Zeichnung näher erläutert. Alle beschriebenen Ausführungsbeispiele sind dabei nur beispielhaft zu verstehen, sie sollen dem Umfang bzw. Geltungsbereich der Erfindung nicht beschränken.

Es zeigen:
- Fig. 1:: Ein erfindungsgemäßes Filterelement im Schnitt,
- Fig. 2:: einen helixförmigen Strömungskörper,
- Fig. 3:: eine perspektivische Darstellung einer erfindungsgemäßen Filterwand in Seitenansicht,
- Fig. 4:: eine Tragekonstruktion einer Filterwand,
- Fig. 5:: eine Prinzipdarstellung der Anordnung von Filterelementen in der Filterwand,
- Fig. 6:: einen Fußkörper zur Halterung der Filterwand in einem fließendem Gewässer.

Ein erfindungsgemäßes Filterelement 10 weist ein Rohr 12 und einen Filterkörper 14 auf. Das Rohr 12 und der Filterkörper 14 sind vorzugsweise zylinderförmig und konzentrisch um eine Längsachse X-X angeordnet. Das Rohr 12 weist ein freies Ende 16 und ein filterkörperseitiges Ende 18 auf. An dem filterkörperseitigen Ende 18 ist ein Tragegerüst 20 befestigt. Dieses kann aus Stäben 22 gebildet sein, die von einer Netzstruktur überzogen sind. Als Netzstruktur kann beispielsweise ein Gitternetz 24, aber auch ein Strumpf vorgesehen sein. Innerhalb des Tragegerüstes 20 ist ein Hohlraum ausgebildet.

Das Tragegerüst 20 ist von einer Grundschicht 26 umgeben, die mit dem Tragegerüst 20 verbunden ist. Um die Grundschicht 26 ist wiederum eine Außenschicht 28 angeordnet, die mit der Grundschicht verbunden ist. Sowohl die Grundschicht 26 als auch die Außenschicht 28 können Epoxydharz als Binde- und Verbindungsmittel aufweisen. Anstellen von Epoxydharz kann jedes andere geeignete Klebe- oder Bindemittel verwendet werden, je nach Anwendungsfall ist jedoch darauf zu achten, dass dieses keine Giftstoffe absondern darf.

Der Filterkörper 14 weist eine Stirnfläche 30 und eine Rückseite 32 auf. Die Rückseite 32 ist im vorliegenden Ausführungsbeispiel nicht von der Außenschicht 28 bedeckt, die Rückseite 32 kann entweder undurchlässig oder aber auch mit der Außenschicht 28 bedeckt sein.

Der Filterkörper 14 weist eine leicht konische Form auf, um ihn bei der Herstellung leichter aus seiner Form entfernen zu können.

Die Stäbe 22 sind vorteilhafterweise durch Querstäbe 34 an den dem Rohr 12 abgewandten Enden miteinander verbunden.

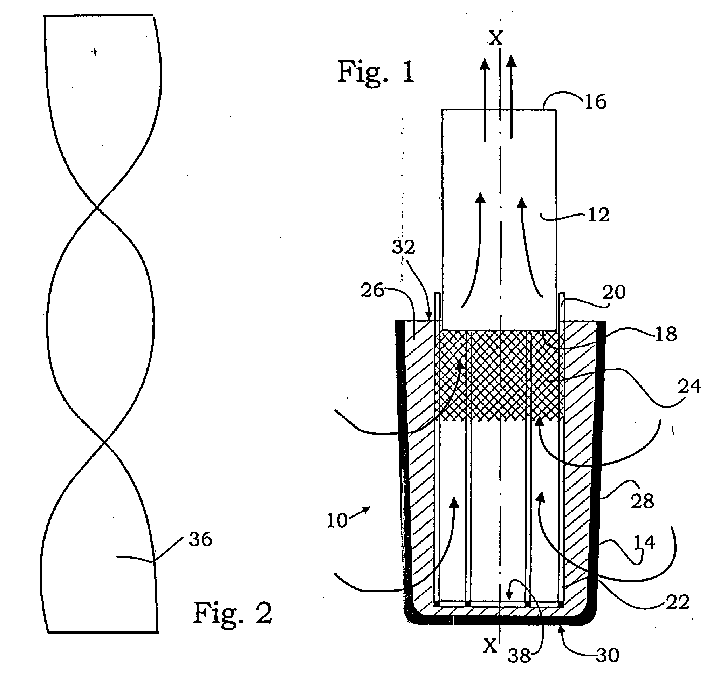

Das Gitternetz 24 ist in Figur 1 nur teilweise dargestellt, es erstreckt sich über die gesamte Länge der Stäbe 22. Die Stäbe 22 treten im dargestellt Ausführungsbeispiel aus der Rückseite 32 des Filterkörpers 14 hervor, auch dies ist nur beispielhaft zu verstehen, auch andere Befestigungsmöglichkeiten für den Filterkörper sind denkbar.

Die dargestellten Pfeile verdeutlichen, dass die Flüssigkeit von außen allseitig durch die Außenschicht 28 und die Grundschicht 26 in den Hohlraum des Tragegerüstes 20 eindringen und durch das Rohr 12 abgeleitet werden kann.

Figur 2 zeigt einen helixförmigen Strömungskörper 36, der in einer besonders vorteilhaften Ausführungsvariante in den Hohlkörper des Tragegerüstes 20 und in das Rohr 12 einsetzbar und in diesen befestigbar ist. Der Strömungskörper 36 ist mit einem inneren Boden 38 des Filterkörpers 14 verbunden und hat die Aufgabe, die verwirbelten Flüssigkeitsmengen kontrolliert durch Umleiten in eine gleichgerichtete Strömung abzuleiten.

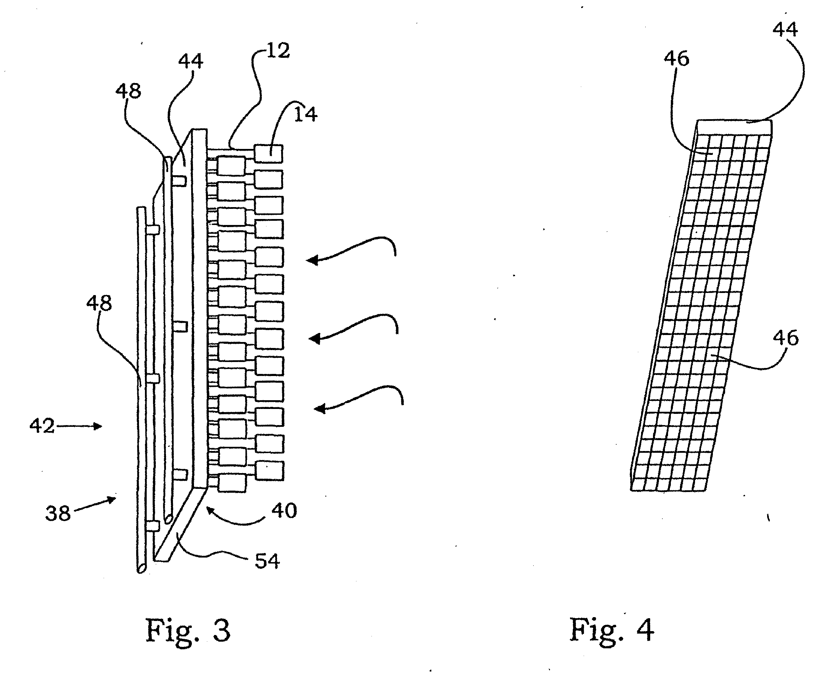

Figur 3 verdeutlicht den Einsatz erfindungsgemäßer Filterelemente 10 in einer Filterwand 38. Diese weist eine der Strömung entgegengesetzte Vorderseite 40 und eine abgewandte Rückseite 42 auf. Die Strömung ist wieder durch Pfeile dargestellt.

Die Filterwand 38 besteht im wesentlichen aus einer Tragekonstruktion 44 (vergleiche auch Figur 4), in die die Filterelemente 10 einsetzbar sind. Die Tragekonstruktion 44 kann auf ihrer Rückseite 42 Halterungselemente 48 aufweisen, mit denen die Filterwand im fließenden Wasser gehalten werden kann.

Die Filterelemente 10 werden mit ihren Rohren 12 in die Öffnungen 46 hineingesteckt und je nach Anwendungsfall mit Hilfe eines Gewindes oder Splints befestigt.

Die Flüssigkeit fließt also durch die Filterkörper 14 und die Rohre 12 hindurch und gelangt so von der Vorderseite 40 zur Rückseite 42 der Tragekonstruktion 44.

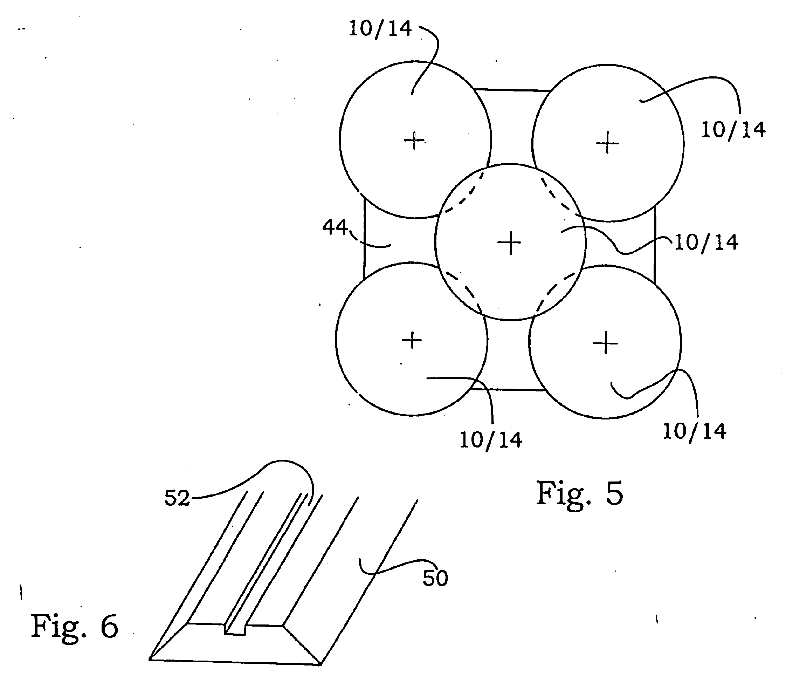

Figur 3 verdeutlicht weiterhin eine vorteilhafte Ausgestaltung einer Filterwand 38 insofern, dass Filterelemente 10 mit langen Rohren 12 und Filterelemente 10 mit kürzeren Rohren 12 vorgesehen sind. Die Filterelemente 10 sind derart angeordnet, dass sich im Prinzip zwei Schichten ergeben, nämlich eine vordere und eine hintere Schicht. Die Filterelemente 10 können zur Ausbildung dieser beiden Schichten beliebig angeordnet sein, Figur 5 verdeutlicht aber eine vorteilhafte Anordnungsmöglichkeit. Zwischen vier Filterelementen 10 mit kurzen Rohren 12 ist mittig ein Filterelement 10 mit einem langen Rohr 12 angeordnet. Dabei können die Filterkörper 14 der Filterelemente 10 mit langem Rohr 12 beabstandet von den Filterkörpern 14 der Filterelemente 10 mit kurzem Rohr 12 angeordnet sein, sie können aber auch bis auf Kontakt aufgeschoben werden.

Die Tragekonstruktion 44 kann durch eine hier nicht gezeigte Abdeckung vorderseitig abgedeckt werden, wobei die Abdeckung kreisrunde Öffnungen zur Aufnahme der Rohre 12 aufweist. Eine solche Abdeckung hat den Vorteil, dass die Filterwand 38 nur durch die Filterelemente 10 von der Flüssigkeit passierbar ist.

Figur 6 zeigt einen Fußkörper 50 zur Aufnahme der Tragekonstruktion 44. Zu diesem Zweck weist der Fußkörper 50 eine Längsnut 52 auf, in die eine untere Querkante 54 der Tragekonstruktion 44 einsetzbar ist. Der Fußkörper 50 wird auf dem Boden bzw. Grund des wasserführenden Kanals oder Flusses aufgesetzt. Die Halterungselemente 48 können dann entfallen, sie können aber auch als weitere zusätzliche Halterung bestehen bleiben.

Ein wesentlicher Vorteil der erfindungsgemäßen Filterwand 38 besteht auch darin, dass die Filterelemente 10 schnell und einfach gewartet bzw. ausgetauscht werden können.

Die Beschreibung ist lediglich beispielhaft zu verstehen, wobei auch die Ausführungsbeispiele nicht dazu gedacht sind, die Erfindung auf diese zu begrenzen. Vielmehr bezieht sich die Erfindung auf alle gleichwirkenden Ausführungsformen, die sich den Erfindungsgedanken zu Nutze machen.

## Patentansprüche

1. Längliches Filterelement (10) für das Zurückhalten von Grobstoffen in einer fließenden Flüssigkeit, mit
- einem Rohr (12), das verbunden ist mit
- einem hohlen Filterkörper (14), der gebildet ist aus
- einem innen angeordneten, einen Hohlraum ausbildenden und mit dem Rohr (12) verbundenen Tragegerüst (20),
- einer Grundschicht (26) aus relativ grobkörnigem Material, dass das Tragegerüst (20) umgibt und mit diesem verbunden ist,
- einer Außenschicht (28) aus relativ feinkörnigem Material, dass die Grundschicht (26) umgibt und mit dieser verbunden ist,
sodass die Flüssigkeit von außen in den Filterkörper (14) und dann durch das Rohr (12) abfließen kann.

2. Längliches Filterelement (10) nach Anspruch 1, **dadurch gekennzeichnet, dass** die Grundschicht (26) aus Split mit einer Körnung von 3 mm bis 10 mm, vorzugsweise 6 mm bis 8 mm und die Außenschicht aus einem körnigen Material mit einer Körnung von weniger als 2 mm, vorzugsweise 0,3 mm bis 1,3 mm gebildet ist.

3. Längliches Filterelement (10) nach Anspruch 1 oder Anspruch 2, **dadurch gekennzeichnet, dass** das Verhältnis der Schichtdicken der Außenschicht (28) und der Grundschicht (26) etwa 1 zu 3 beträgt.

4. Längliches Filterelement (10) nach einem der Ansprüche 1 bis 3, **dadurch gekennzeichnet, dass** im Hohlraum des Tragegerüstes ein Strömungskörper (36) angeordnet ist, der sich bis in das Rohr (12) erstreckt und turbulente Strömungen der hereinströmenden Flüssigkeit in eine gleichgerichtete Strömung umleitet.

5. Längliches Filterelement (10) nach einem der Ansprüche 1 bis 4, **dadurch gekennzeichnet, dass** das Tragegerüst aus Stäben (22) gebildet ist, die endseitig mit einem freien Ende der Rohres (12) verbunden sind und die von einem Gitternetz (24) umgeben sind.

6. Längliches Filterelement (10) nach einem der Ansprüche 1 bis 5, **dadurch gekennzeichnet, dass** der Filterkörper (14) im wesentlichen zylinderförmig ausgebildet ist.

7. **Verwendung eines länglichen Filterelementes (10) nach einem der Ansprüche 1 bis 6 in einer Filterwand (38)** zum Einsetzen in eine strömende Flüssigkeit, wobei die Filterwand (38)
- eine Tragekonstruktion (44) mit einer der Fließrichtung der Flüssigkeit im eingesetzten Zustand entgegengesetzten Vorderseite (40) und einer Rückseite (42), und
- Öffnungen (46), in die je ein Rohr (12) des Filterelementes (10) **eingesetzt ist,** aufweist.

8. **Verwendung eines länglichen Filterelementes (10) in einer Filterwand (38) nach Anspruch 7, dadurch gekennzeichnet, dass die Vorderseite (40) der Filterwand (38)** durch eine Abdeckung flächig abgedeckt ist, wobei die Abdeckung kreisförmige Öffnungen aufweist, in die jeweils ein Rohr (12) eines Filterelements (10) einsetzbar ist.

9. **Verwendung eines länglichen Filterelementes (10) in einer Filterwand (38) nach Anspruch 7 oder 8, dadurch gekennzeichnet, dass in die Öffnungen (46) der Filterwand (38)** die Filterelemente (10) mit unterschiedlich langen Rohren (12) eingesetzt sind, sodass im Querschnitt der Filterwand (38) eine vordere Schicht Filterkörper (14) und eine hintere Schicht Filterkörper (14) ausgebildet ist.

10. **Verwendung eines länglichen Filterelementes (10) in einer Filterwand (38) nach Anspruch 9, dadurch gekennzeichnet, dass die Filterelemente (10) in der Filterwand (38)** derart angeordnet sind, dass sich jeweils ein langes Rohr (12) zwischen vier Filterkörpern (14) von Filterelementen (10) der hinteren Schicht hindurch in eine Öffnung (46) erstreckt.

11. **Verwendung eines länglichen Filterelementes (10) in einer Filterwand (38)** nach einem der Ansprüche 7 bis 10, **dadurch gekennzeichnet, dass** die Filterelemente (10) an der Tragekonstruktion (44) lösbar befestigt sind.

12. **Verwendung eines länglichen Filterelementes (10) in einer Filterwand (38)** nach einem der Ansprüche 7 bis 11, **dadurch gekennzeichnet, dass** an der Filterwand (38) ein Fußkörper (50) mit einer Nut (52) vorgesehen ist, in die die Tragekonstruktion (44) mit einer Querkante (54) einstellbar und in dieser gehalten ist.

## Claims

1. An elongate filter element (10) for retaining rejects in a flowing liquid, with
- a tube (12) that is connected to
- a hollow filter body (14) that is formed from
- a carrier frame (20) connected to said tube (12), forming a hollow space and disposed inside,
- a base layer (26) made from a relatively coarse-grained material that surrounds the carrier frame (20) and is connected thereto,
- an outer layer (28) made from relatively fine-grained material that surrounds the base layer (26) and is connected thereto,
- so as to allow the liquid to flow from outside into the filter body (14) and then out through said tube (12).

2. The elongate filter element (10) as set forth in claim 1, **characterized in that** the base layer (26) is formed from grit having a grit size ranging from 3 mm to 10 mm, preferably from 6 mm to 8 mm, and that the outer layer is formed from a grain material having a grain size of less than 2 mm, preferably ranging from 0.3 mm to 1.3 mm.

3. The elongate filter element (10) as set forth in claim 1 or claim 2, **characterized in that** the layer thickness ratio between the outer layer (28) and the base layer (26) is about 1 to 3.

4. The elongate filter element (10) as set forth in any one of the claims 1 through 3, **characterized in that** a flow body (36) is disposed in the hollow space of the carrier frame, said flow body extending as far as into the tube (12) and diverting turbulent flows of the inflowing liquid into a rectified flow.

5. The elongate filter element (10) as set forth in any one of the claims 1 through 4, **characterized in that** the carrier frame is formed from rods (22) that are connected at their end to a free end of the tube (12) and that are surrounded by a grid net (24).

6. The elongate filter element (10) as set forth in any one of the claims 1 through 5, **characterized in that** the filter body (14) is substantially formed in a cylinder-shaped configuration.

7. Use of an elongate filter element (10) as set forth in any one of the claims 1 through 6 in a filter wall (38) for use in a flowing liquid, said filter wall (38) comprising
- a carrier construction (44) with a front side (40) opposing the flow direction of the liquid in the mounted condition and with a rear side (42), and
- openings (46), into each of which a tube (12) of the filter element (10) is inserted.

8. Use of an elongate filter element (10) in a filter wall (38) as set forth in claim 7, **characterized in that** the front side (40) of the filter wall (38) is covered by a planar cover, said cover comprising circular openings into each of which a tube (12) of a filter element (10) is insertable.

9. Use of an elongate filter element (10) in a filter wall (38) as set forth in claim 7 or 8, **characterized in that** the filter elements (10) are inserted into the openings (46) in the filter wall (38) with tubes (12) of different lengths so that in the cross section of the filter wall (38) there is formed a filter body (14) front layer and a filter body (14) rear layer.

10. Use of an elongate filter element (10) in a filter wall (38) as set forth in claim 9, **characterized in that** the filter elements (10) in the filter wall (38) are disposed in such a manner that a long tube (12) extends into a respective one of the openings (46) between four filter bodies (14) of filter elements (10) of the rear layer.

11. Use of an elongate filter element (10) in a filter wall (38) as set forth in any one of the claims 7 through 10, **characterized in that** the filter elements (10) are releasably fastened to the carrier construction (44).

12. Use of an elongate filter element (10) in a filter wall (38) as set forth in any one of the claims 7 through 11, **characterized in that** on the filter wall (38) there is provided a stand body (50) with a groove (52) into which the carrier construction (44) is adapted to be placed with a transverse edge (54) and in which it is retained.

## Revendications

1. Elément filtrant allongé (10) pour retenir des matières grossières dans un liquide courant, comprenant
- un tuyau (12) qui est relié à
- un corps creux de filtration (14) qui est formé
- d'un cadre porteur (20) disposé à l'intérieur, formant un espace creux et relié audit tuyau (12),
- d'une couche de base (26) en une matière à grains relativement gros qui entoure ledit cadre porteur (20) et est reliée à celui-ci,
- d'une couche extérieure (28) en une matière à grains relativement fins qui entoure ladite couche de base (26) et est reliée à celle-ci,
- de sorte que le liquide peut s'écouler de l'extérieur dans ledit corps de filtration (14) et puis à travers ledit tuyau (12).

2. Elément filtrant allongé (10) selon la revendication 1, **caractérisé par le fait que** ladite couche de base (26) est réalisée en gravillon ayant une granulométrie comprise entre 3 mm et 10 mm, de préférence entre 6 mm et 8 mm et que ladite couche extérieure est réalisée dans une matière granuleuse ayant une granulométrie inférieure à 2 mm, de préférence comprise entre 0,3 mm et 1,3 mm.

3. Elément filtrant allongé (10) selon la revendication 1 ou la revendication 2, **caractérisé par le fait que** le rapport des épaisseurs de couche de la couche extérieure (28) et de la couche de base (26) est de 1 à 3 à peu près.

4. Elément filtrant allongé (10) selon l'une des revendications 1 à 3, **caractérisé par le fait que** dans l'espace creux du cadre porteur est disposé un corps d'écoulement (36) qui s'étend jusque dans ledit tuyau (12) et qui dérive les écoulements turbulents du liquide affluent de manière à obtenir un écoulement dirigé dans la même direction.

5. Elément filtrant allongé (10) selon l'une des revendications 1 à 4, **caractérisé par le fait que** ledit cadre porteur est formé de barres (22) qui, à l'extrémité, sont reliées à une extrémité libre du tuyau (12) et qui sont entourées d'un filet en treillis (24).

6. Elément filtrant allongé (10) selon l'une des revendications 1 à 5, **caractérisé par le fait que** ledit corps de filtration (14) est réalisé de manière à être pour l'essentiel cylindrique.

7. Utilisation d ' un élément filtrant allongé (10) selon l'une des revendications 1 à 6 dans une paroi filtrante (38) destinée à être mise en place dans un liquide courant, ladite paroi filtrante (38) présentant
- une construction porteuse (44) ayant une face avant (40) opposée au sens d'écoulement du liquide lorsqu'elle est mise en place ainsi qu'une face arrière (42), et
- des ouvertures (46) dans chacune d'elles est introduit un tuyau (12) de l'élément filtrant (10).

8. Utilisation d'un élément filtrant allongé (10) dans une paroi filtrante (38) selon la revendication 7, **caractérisée par le fait que** la face avant (40) de la paroi filtrante (38) est recouverte en surface par une couverture, ladite couverture présentant des ouvertures circulaires dans chacune d'elles peut être introduit un tuyau (12) d'un élément filtrant (10).

9. Utilisation d'un élément filtrant allongé (10) dans une paroi filtrante (38) selon la revendication 7 ou 8, **caractérisée par le fait que** dans lesdites ouvertures (46) de la paroi filtrante (38) sont introduits les éléments filtrants (10) ayant des tuyaux (12) de longueurs différentes, de sorte que, en coupe transversale de la paroi filtrante (38), est réalisée une couche avant de corps de filtration (14) et une couche arrière de corps de filtration (14).

10. Utilisation d'un élément filtrant allongé (10) dans une paroi filtrante (38) selon la revendication 9, **caractérisée par le fait que** les éléments filtrants (10) sont aménagés dans la paroi filtrante (38) de telle manière que respectivement un tuyau long (12) s'étend entre quatre corps de filtration (14) d'éléments filtrants (10) de la couche arrière dans une ouverture (46).

11. Utilisation d'un élément filtrant allongé (10) dans une paroi filtrante (38) selon l'une des revendications 7 à 10, **caractérisée par le fait que** lesdits éléments filtrants (10) sont fixés de manière amovible sur ladite construction porteuse (44).

12. Utilisation d'un élément filtrant allongé (10) dans une paroi filtrante (38) selon l'une des revendications 7 à 11, **caractérisée par le fait que** sur ladite paroi filtrante (38) est prévu un corps formant pied (50) présentant une rainure (52) dans laquelle ladite construction porteuse (44) peut être placée avec une arête transversale (54) et y est maintenue.
